# EUROPEAN PATENT APPLICATION

(11) **EP 2 051 262 A2**
(43) Date of publication of application: **22.04.2009**
(21) Application number: 08253310.0
(22) Date of filing: 10.10.2008
(51) Int. Cl.: H01F 3/14, H01F 27/34

(54) **Parallel gapped ferrite core**

(30) Priority: 16.10.2007 US 974760
(71) Applicant: Comarco Wireless Technologies, Inc., Lake Forest, CA 92630-8870 (US)
(72) Inventor: Lanni, Thomas W., Laguna Niguel, CA 92677-2475 (US)
(74) Representative: Kenrick, Mark Lloyd

(57) **Abstract**

A transformer or inductor includes a core, a printed circuit board, a frame and a gapping plate. The core is positioned in a first plane A winding is located on top of a portion of the core. The frame is positioned in a second plane and the frame is located on top of the winding and has a hole. The gapping plate resides in the second plane and is disposed within the hole of the frame. The gapping plate has a smaller area than the hole of the frame and this creates a gap between the gapping plate and the frame. The magnetic flux generated during operation of the transformer or inductor radiates in a direction perpendicular to the first plane and the second plane.

## Description

### BACKGROUND OF THE INVENTION

### Field of the Invention

The present invention generally relates to a core utilized in transformers and inductors, and in particular to a parallel gapped ferrite core. Transformers and inductors utilizing the core of the present invention find applications in various electronic circuits, including switching power supplies.

### Description of Related Art

Not all of the power input to a transformer or inductor is delivered to a load coupled to the inductor or transformer. The difference between the input power and the output power is the loss, which is often manifested as heat. Three types of loss are associated with an inductor or transformer. They are copper loss, core loss, and fringing loss.

The core loss is dependent on the core material and the flux density property of the core material. The core loss is a fixed loss.

Copper loss is based the AC and DC resistance of the windings. The copper loss is related to the current demand of the load to which the inductor or transformer is coupled. If the core is an inductor, the AC resistance of the winding assists in generating the copper loss.

When designing a transformer or inductor core, a gap is utilized to store energy. Fringing loss is the blooming of the flux lines across the gap. Energy builds up in a core and can be released into the windings of the transformer or the inductor. Fringing losses (caused by the fringing flux lines across the gap) cause stray flux lines around the gap. These stray flux lines create eddy currents which impinge on the windings of the transformer or inductor.
Accordingly, it is desired to minimize the fringing loss of the core.

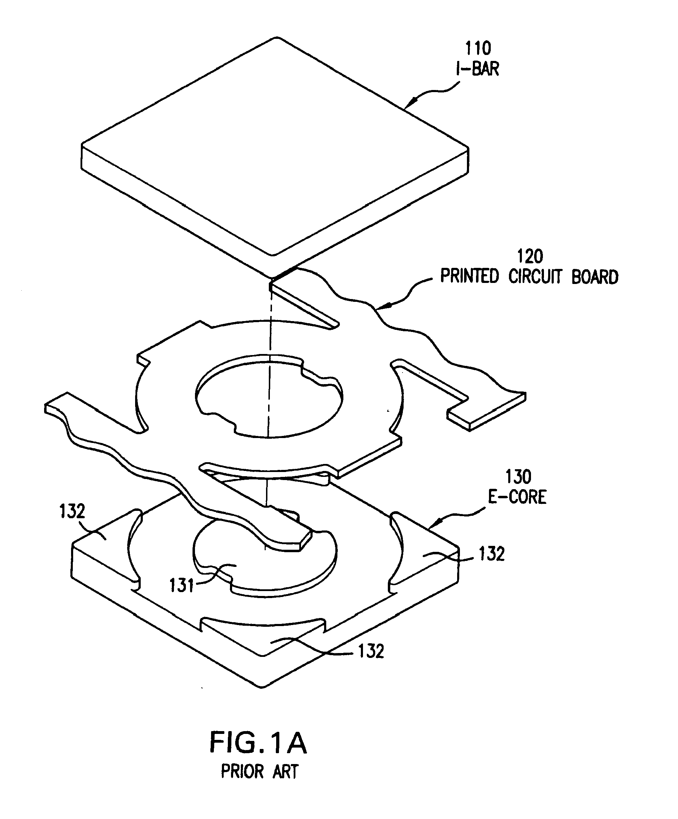

Fig. 1A illustrates a top perspective view of a core according to the prior art. The transformer core includes a I-bar core 110, a printed circuit board 120, and an E-core 130. The printed circuit board 120 includes cutouts to allow a center leg 131 and end sections 132 of the E-core 130to pass through the circuit board 120 without contacting the circuit board 120.

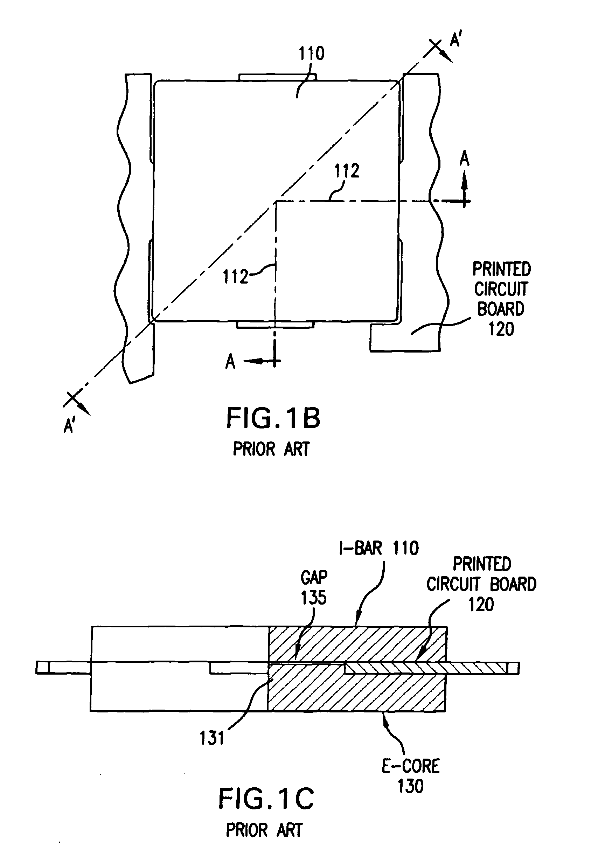

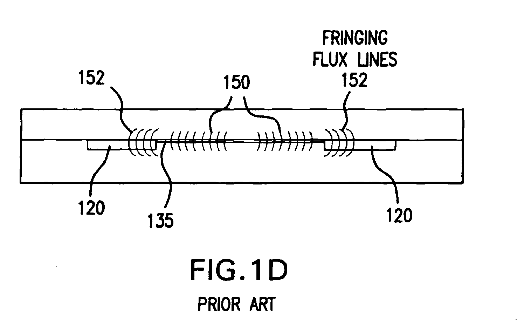

Fig. 1B illustrates a top view of the core of Fig. 1A. The I-bar core 110 is positioned on top of the printed circuit board 120. Fig. 1C illustrates a cross-sectional view of Fig. 1B along the line A-A 112. Referring to Fig. 1C, a gap 135 is formed between a center leg 131 of an E-core 130 and the I-bar core 110. The gap 135 may be formed because a center section 131 of the E-core 130 has been machined or cut down to ensure there is no contact between the center section 131 of the E-core and the I-bar core 110. The gap 135 allows a core to carry DC currents and prevent saturation. The gap 135 also sets the inductance. Fig. 1D illustrates magnetic flux lines 150 and 152 in two locations. Fig. 1D is a side cross-sectional view of the transformer taken across line A'-A'. In a perfect core utilized in either a transformer or inductor, the magnetic flux lines 150 travel across the gap 135 as desired. Flux lines 152 are fringing flux lines. Instead of traveling straight across the gap 135, the fringing flux lines 152 fringe out when traveling from the E-core 130 to 110. The fringe flux lines impinge upon the circuit board 120 at an angle approaching 90 degrees. In other words, the fringe flux lines are substantially perpendicular to the circuit board 120 and the windings therein, thus inducing the eddy currents. The windings are planar with the circuit board 120 and as illustrated in Fig. 1D, the fringing flux lines 152 travel in a horizontal direction across the circuit board 120. These create eddy currents caused by the fringing flux lines and decrease the efficiency of the transformer or inductor.

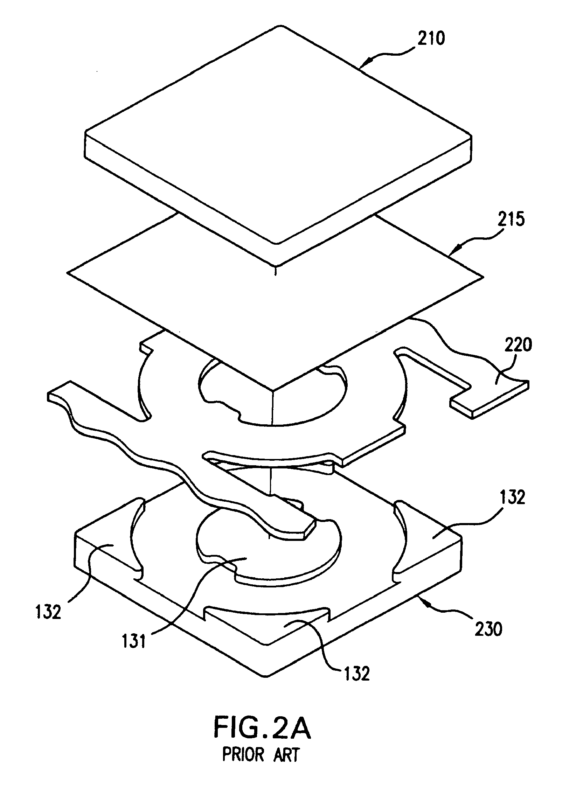

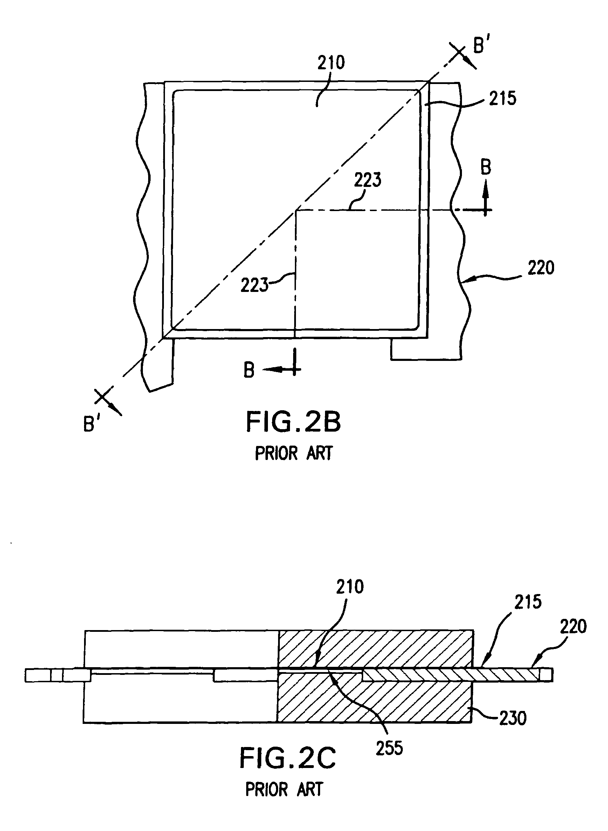

Fig. 2A illustrates a top perspective view of a second embodiment of a transformer core according to the prior art. The core may be referred to as a distributed gap core. The distributed gap core 200 may include an I-bar core 210, a spacer 215, a printed circuit board 220, and an E-core 230. The I-bar core 210 is positioned on top of the spacer 215 which is positioned on top of the printed circuit board 220. The printed circuit board 220 includes cutouts to allow a center leg 131 and end sections 132 of the E-core 230 to pass through the circuit board 220 without contacting the circuit board 220. Fig. 2B illustrates a top view of the distributed gap core according to the prior art. Fig. 2B illustrates the positioning of I-bar core 210, the spacer 215, and the printed circuit board 220 in the distributed gap core 200. This configuration is referred to as a distributed gap core because the spacer 215 forms a gap between not only the center leg 231 and the I-bar core 210 but also between the end sections 232 and the I-bar core 210. The spacer may be made of a dielectric material or a non-magnetic material.

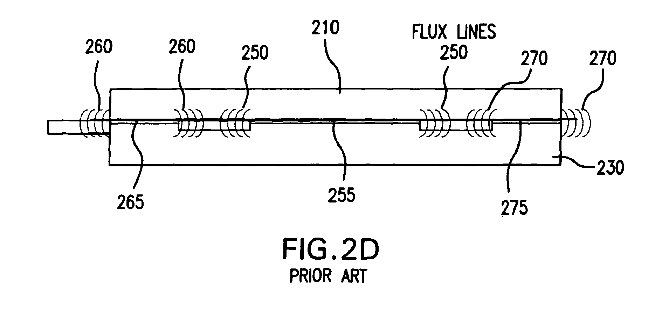

Fig. 2C illustrates a side cross-sectional view of the core according to the prior art. The cross-sectional view of Fig. 2C is taken along line B-B 223 of Fig. 2B. As illustrated in Fig. 2C, the I-bar core 210 is positioned on top of the spacer 215 and the spacer 215 is positioned on top of the printed circuit board 220. In an embodiment of the invention, the spacer 215 is also positioned on top of and contacting portions of the E-core 230, specifically the center leg 231. A gap 255 is formed between the E-core 230 and the printed circuit board 220. The gap 255 results in magnetic flux lines and fringing flux lines being generated. Fig. 2D illustrates fringing flux lines generated by the gap in the distributed gap transformer core according to the prior art. Fig. 2D is a cross-sectional view taken along line B'-B' of Fig. 2B. As illustrated in Fig. 2D, the fringing flux lines 250 generated by the gap 255 travel in a horizontal direction across the printed circuit board. The fringing flux lines 250 impinge upon the circuit board 120 at angle approaching 90 degrees. The fringing flux lines 250 are substantially perpendicular to the circuit board and windings therein. These flux lines 250 are generated by the gap 255 between the I-bar core 210 and the center leg 231 of the E-core 230. As illustrated in Fig. 2, there are gaps 265 and 275 created between the end sections 232 of the E-core 230 and the I-bar core 210. Fringing flux lines are generated by the gaps 265 and 275 and are represented by numerals 260 and 270. The fringing flux lines 250, 260 and 270 create eddy currents in the windings of the transformer or inductor. Eddy currents decrease the efficiency of the windings in the transformer or inductor, which result in decreased overall efficiency of the transformer or inductor.

### BRIEF SUMMARY OF THE INVENTION

According to a first aspect of the present invention, there is provided a transformer, comprising: a core positioned in a first plane; a winding that is located on a top portion of the core; a frame, residing in a second plane, the frame being disposed on top of the winding and having a hole; and a gapping plate, residing in the second plane and being disposed within the hole of the frame, the gapping plate having a smaller area than the hole of the frame which creates an gap between the gapping plate and the frame, wherein the magnetic flux generated during operation of the transformer radiates in a direction perpendicular to the first plane and the second plane.

The core may be an E-core.

The transformer may further include a spacer residing in the second plane, the spacer being disposed in the gap between the gapping plate and the frame.

The frame may be circular-shaped. The frame may be square-shaped.

The hole and the gapping plate are may be circular in shape.

The windings may be disposed on a printed circuit board. The core may have depressions into which the printed circuit board fits and a center area which has a raised surface above a top surface of the depressions. The center area of the core may be disposed in an opening of the printed circuit board and contacts a bottom surface of the gapping plate.

The transformer may further include, be provided with, or be in connection with a buck regulator.

A voltage applied to the transformer may be a DC voltage.

The winding may be disposed on a printed circuit board.

According to a second aspect of the present invention, there is provided a core utilized in a magnetic-electrical component, comprising: a core portion; and an I-shaped core portion disposed on sections of the core portion, the I-shaped core portion include a frame and a gapping plate, the frame including a hole having a first area and the gapping plate having a second area smaller than the first area to create an gap between the frame and the gapping plate, wherein placement of the gap causes magnetic flux generated during operation of the magnetic-electrical component to radiate in a direction perpendicular to the I-shaped core portion.

The core portion may be an E-shaped core portion. A center section of the E-shaped core portion may touch the gapping plate of the I-shaped core portion.

The gap may have a width of less than 0.010 inches.

The core may further include a spacer to maintain a distance for the gap between an outer edge of the gapping plate and the hole in the frame of the I-shaped core portion.

The gapping plate may have a circular shape.

According to a third aspect of the present invention, there is provided a magnetic transformer core comprising: a first magnetic core portion positioned in a first horizontal plane; and a second magnetic core portion positioned in a second horizontal plane, the second horizontal plane being parallel to the first horizontal plane, the second magnetic core portion including a frame section, having a hole and a cut-out section, the cut-out section having a smaller area than an area of the hole which creates a gap between the cut-out section and the frame, wherein magnetic flux generated during operation of the transformer core radiates in a direction perpendicular to the first horizontal plane and the second horizontal plane.

The first magnetic core portion may include depressed areas and a center raised section and the cut-out section of the second magnetic core portion lies on top of the center raised section of the magnetic core.

The magnetic transformer core may further include a spacer placed in the gap.

The gap may have a width of less than 0.010 inches.

The magnetic transformer core may form part of a power adapter, the power adapter comprising: an input power circuit for receiving an input voltage; a boost inductor to receive the input voltage and to output a boosted voltage, the inductor including a winding and the core third aspect of the invention; and a rectifier to receive the boosted voltage and to generate a rectified voltage. The magnetic transformer may further include a buck regulator to receive the rectified voltage and to generate an output voltage. The input voltage may be a DC voltage.

According to a fourth aspect of the present invention, there is provided a core utilized in a magnetic-electrical component, comprising: a first magnetic core portion; a second magnetic core portion lying above the first magnetic core portion, the second magnetic core portion having a hole having a first circumference; and a third magnetic core portion lying above the first magnetic core portion, the third magnetic core portion having a second circumference less than the first circumference to create a gap between the second magnetic core portion and the third magnetic core portion, wherein the magnetic flux generated during operation of the magnetic-electrical component radiates in a direction perpendicular from the first magnetic core portion, the second magnetic core portion and the third magnetic core portion.

The hole may have a circular shape and the third magnetic core portion may have a circular shape.

The core may further include a spacer placed in the gap.

The second magnetic core portion and the third magnetic core portion may contact a top surface of the first magnetic core portion.

According to a fifth aspect of the present invention, there is provided a power adapter comprising: an input circuit to generate an intermediate voltage; a transformer to receive the intermediate voltage and to output a transformed voltage, the transformer including a primary winding, a core, and a secondary winding, the core including a core section positioned in a first plane; a winding that is located on a top portion of the core section; a frame, residing in a second plane, the frame being located on top of the winding and having a hole; and a gapping plate, residing in the second plane and being disposed within the hole of the frame, the gapping plate having a smaller area than the hole of the frame which creates an gap between the gapping plate and the frame, wherein the magnetic flux generated during operation of the transformer radiates in a direction perpendicular to the first plane and the second plane; and a rectifier to receive the transformed voltage and to generate a rectified voltage.

The power adapter may further include a buck regulator to receive the rectified voltage and to generate an output voltage.

A voltage applied to the input circuit may be a DC voltage.

The winding may be disposed on a printed circuit board.

According to a sixth aspect of the present invention, there is provided a power adapter comprising: an input power circuit receiving an input voltage; a boost inductor to receive the input voltage and to output a boosted voltage, the inductor including a winding and a core, the core including: a core section positioned in a first plane; a winding that is located on a top portion of the core section; a frame, residing in a second plane, the frame being located on top of the winding and having a hole; and a gapping plate, residing in the second plane and being disposed within the hole of the frame, the gapping plate having a smaller area than the hole of the frame which creates an gap between the gapping plate and the frame, wherein the magnetic flux generated during operation of the boost inductor radiates in a direction perpendicular to the first plane and the second plane; and a rectifier to receive the boosted voltage and to generate a rectified voltage.

The power adapter may further include a buck regulator to receive the rectified voltage and to generate an output voltage.

The input voltage may be a DC voltage.

According to a seventh aspect of the present invention, there is provided a power adapter comprising: an input circuit to generate an intermediate voltage; a transformer, the transformer including a primary winding, a secondary winding, and a core, the primary winding receiving the intermediate voltage, and outputting a transformed voltage at the secondary winding, the core including: a core portion; and an I-shaped core portion disposed on sections of the core portion, where the I-shaped core portion includes a frame and a gapping plate, the frame including a hole having a first area and the gapping plate having a second area smaller than the first area to create an gap between the frame and the gapping plate, wherein placement of the gap causes magnetic flux generated during operation of the core to radiate in a direction perpendicular to the I-shaped core portion; and a rectifier to receive the transformed voltage and generate a rectified voltage.

The power adapter may further include a buck regulator to receive the rectified voltage and to generate an output voltage.

A voltage applied to the input circuit may be a DC voltage.

According to an eighth aspect of the present invention, there is provided a power adapter comprising: an input power circuit receiving an input voltage; a boost inductor to receive the input voltage and to output a boosted voltage, the inductor including a winding and a core, the core including: a core portion; and an I-shaped core portion disposed on sections of the core portion, where the I-shaped core portion includes a frame and a gapping plate, the frame including a hole having a first area and the gapping plate having a second area smaller than the first area to create an gap between the frame and the gapping plate, wherein placement of the gap causes magnetic flux generated during operation of the core to radiate in a direction perpendicular to the I-shaped core portion; and a rectifier to receive the boosted voltage and to output a rectified voltage.

The power adapter may further include a buck regulator to receive the rectified voltage and to generate an output voltage.

The input voltage may be a DC voltage.

### BRIEF DESCRIPTION OF THE DRAWINGS

Fig. 1A illustrates a top perspective view of a core according to the prior art;

Fig. 1B illustrates a top view of the core of Fig. 1A;

Fig. 1C is a side cross-section view taken across line A - A of Fig. 1B;

Fig. 1D illustrates magnetic flux lines generated by a gap in the core;

Fig. 2A illustrates a top perspective view of a second embodiment of a core according to the prior art;

Fig. 2B illustrates a top view of the distributed gap core of Fig. 2A;

Fig. 2C illustrates a side cross-sectional view taken across the line B - B of Fig. 2B;

Fig. 2D illustrates flux lines generated by a gap in the core of Fig. 2A;

Fig. 3A illustrates an exploded view of a transformer core according to an embodiment of the invention;

Fig. 3B illustrates a top view of the transformer core of Fig. 3A;

Fig. 3C illustrates a side cross-sectional view taken across the line C - C of Fig. 3B;

Fig. 3D illustrates flux lines generated by a gap in the core of Fig. 3A;

Fig. 3E illustrates a top view of a core including variable width gaps according to an embodiment of the invention;

Fig. 3F illustrates a side cross-sectional view taken across the line D-D of Fig. 3E;

Fig. 4 illustrates a core including a parallel gapped core and distributed gap core according to an embodiment of the invention; and

Figure 5 illustrates a block diagram of a power adapter system with a transformer and an inductor utilizing a core of the present invention.

### DETAILED DESCRIPTION OF THE INVENTION

A core, as discussed below, may be utilized in an inductor (i.e., an inductor core) or a transformer (i.e., a transformer core). The core may be made of a number of materials including alloys, amorphous iron power, manganese-zinc ferrite, molybdenum permalloy powder, nickel-zinc ferrite, sendust, and silicon steel. In the description below, the core may be referred to as a transformer core, but the description equally applies to an inductor core.

In the description below and corresponding drawings, the windings are described and illustrated as being disposed on a printed circuit board. The description equally applies to other windings that are located or positioned on any surface that is between two magnetic elements (e.g., cores, gapping plates, frames, core portions). For example, the windings may be formed on a stamped conductor sheets that is placed between two insulating sheets or the windings may be wire wrapped around an insulating spool.

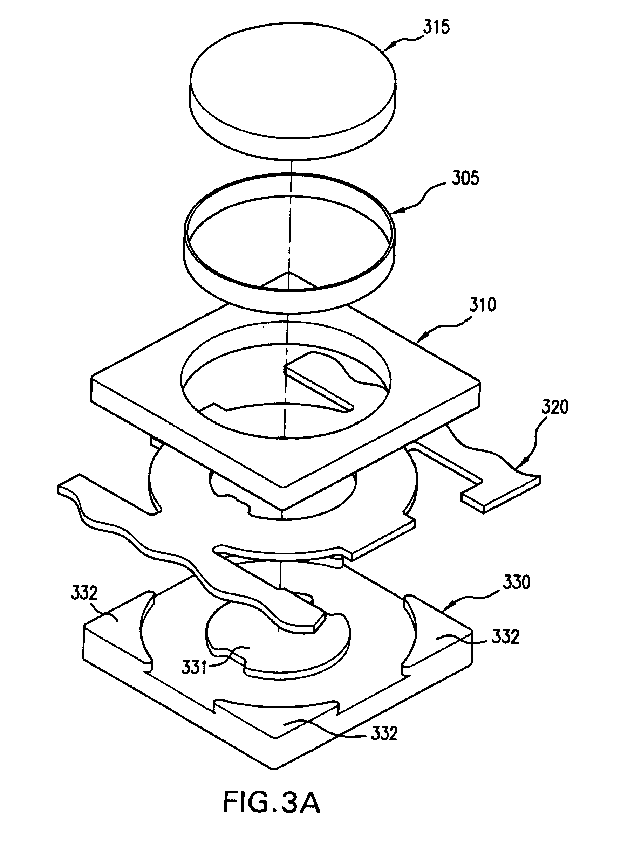

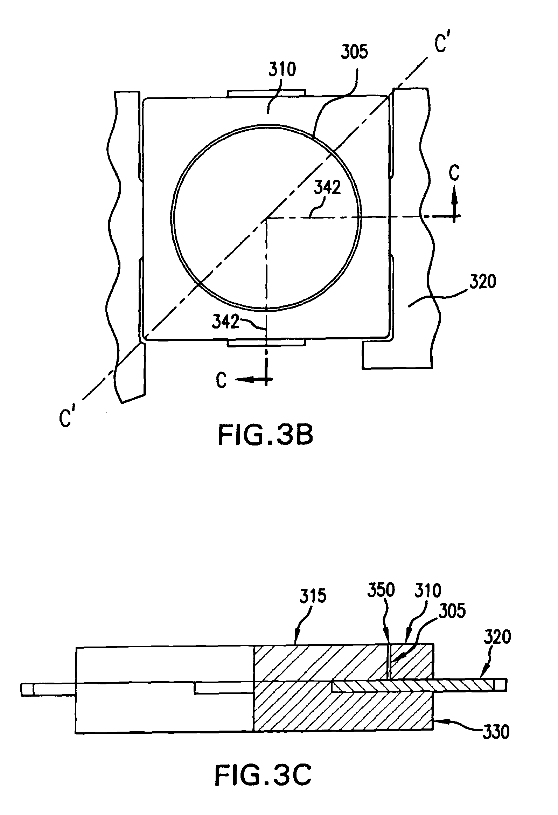

Fig. 3A illustrates an exploded view of a transformer core according to an embodiment of the invention. In an embodiment of the invention, the transformer core includes a gapping plate 315, a spacer 305, a frame core 310, a printed circuit board 320 and a bottom core 330. Illustratively, the bottom core 330 may be an E-shaped core. In an embodiment of the invention, the frame core 310 may be rectangular- or square-shaped. The frame core may also be circular, an oval, a hexagon or other shapes. A portion or section of the frame core 310 may be cut out or removed from the frame core. In an embodiment of the invention illustrated in Figs 3A and 3B, a circular portion of the frame core 310 is cut out.

In an embodiment of the invention, the gapping plate 315 may be constructed from the cutout portion of the frame core 310. In the embodiment of the invention illustrated in Fig. 3A, the result is a circular gapping plate 315. Illustratively, the diameter of the circular gapping plate 315 may be smaller, by a predetermined amount, than the diameter of the cutout part of the frame core 310. This may be created by the enlarging a size of the hole in the frame core 310 or by grinding down the edge of the gapping plate 315. A circular gap is created between the gapping plate 315 and the frame core 310 because of the different diameter sizes.
In an embodiment of the invention, a spacer 305 may be placed in a portion of the gap to ensure that the gapping plate 315 maintains a fixed position with respect to the frame core 310. The spacer may be constructed of a dielectric material or a non-magnetic material. In this embodiment of the invention, the spacer 305 forms the gap which generates flux lines and fringing flux lines. The printed circuit board 320 may include cutouts to allow a center leg 331 and end sections (or legs) 332 of the E-core to pass through the printed circuit board 320.

Fig. 3B illustrates a top view of the transformer core of Fig. 3A. The gapping plate 315 is placed inside the cutout of the frame core 310. Both the gapping plate 315 and frame core 310 rest on top of the printed circuit board 320. The spacer 305 may fill the gap between the outer circumference of the gapping plate 315 and the inner circumference of the frame core 310.

Fig. 3C illustrates a cross-sectional view of the transformer core around a printed circuit board according to an embodiment of the present invention. The cross-section is taken across line C-C 342 of Fig. 3B. The bottom core 330 is positioned below the printed circuit board 320. A center leg 331 of the bottom core 330 passes through a cutout in the printed circuit board 320. In an embodiment of the invention, the center leg 331 of the bottom core 330 may contact the gapping plate 315. In this embodiment of the invention, there is no gap between the center leg 331 of the bottom core 330 and the gapping plate 315. Because there is no gap, there are no fringing flux lines flowing horizontally across windings on the printed circuit board 320. No eddy currents are created and thus the efficiency of the windings is improved over the prior art. Under other operating conditions, there may be minimal fringing flux lines. As illustrated in Fig. 3C, the gap 350 is a vertical air gap and lies above a portion of the printed circuit board 340. The gap 350 is an area between the gapping plate 315 and the frame core 330 that exists after the cutout has been removed. The spacer 305 forms the gap 350. In this embodiment of the invention, there is no gap between either the frame core 310 or the gapping plate 315 and the printed circuit board 240. Likewise, there is no gap between the printed circuit board 320 and the bottom core 330.

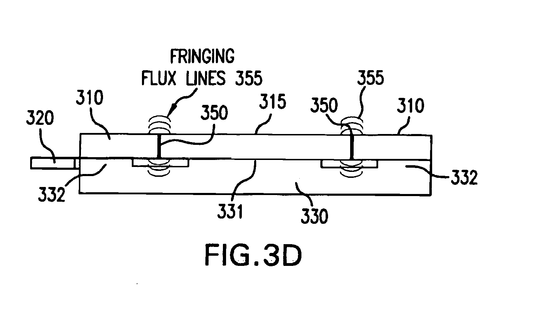

Fig. 3D is a cross-sectional view of the transformer core illustrated in Figs. 3A, 3B and 3C according to an embodiment of the invention. Fig. 3D is taken across line C'-C' of Fig. 3B. As is illustrated in Fig. 3D, there is no gap between the end sections 332 of the bottom core 330 and the frame core 310. There is also no gap between the center leg 331 of the bottom core 330 and the gapping plate 315. A gap 350 exists between the gapping plate 315 and the frame core 310. As illustrated in Fig. 3D, two gaps 350 exist in this cross-sectional view, e.g., one on the left side of the core and one on the right side of the core. Fringing flux lines 355 radiate away from the gap(s) 350 in a vertical direction. The fringing flux lines 355 are radiating in planes parallel with the windings on the circuit board 320. In this embodiment of the invention, vertically radiating fringing flux lines 355 (or parallel radiating flux lines) do not interfere with windings on the printed circuit board 320 of the transformer and do not create eddy currents. Under other operating conditions, vertically radiating flux lines 355 interfere minimally with windings of the printed circuit board 320 of the transformer and create small magnitude eddy currents. Accordingly, the windings of the printed circuit board 320 operate efficiently and the transformer suffers minimal losses due to fringing loss in the embodiment of the invention illustrated in Fig. 3D.

In an embodiment of the invention, the spacer 305 may be made of plastic. Alternatively, the spacer 305 may be made of any non-conductive and non-magnetic material. Any suitable insulating material may be utilized to construct the spacer. In embodiments of the invention, the thickness of the vertical gap (e.g., vertical gap 350) may be 10 hundredths of an inch (i.e., 0.010 inches). The thickness may vary depending on the application in which the core is utilized and may have a thickness in the range of 0.001 1 inches to 0.1 inches.

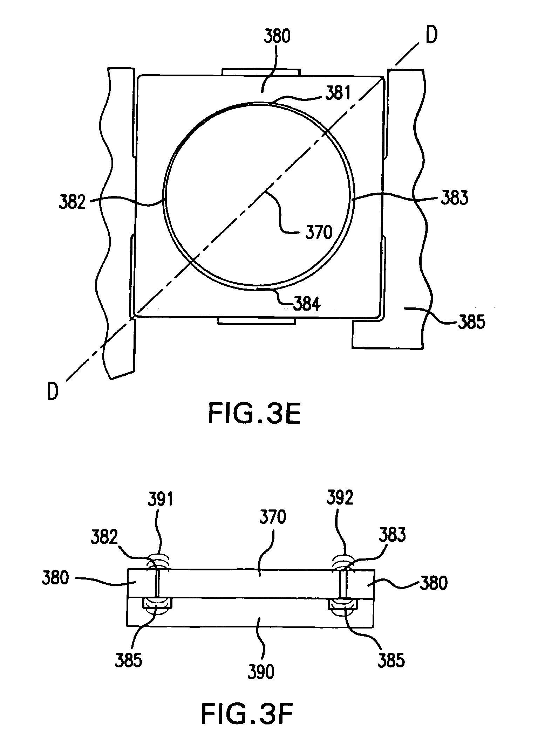

Fig. 3E illustrates a top view of a core embodying the invention with a variable width gap according to an embodiment of the invention. Fig. 3E illustrates a gapping plate 370, a spacer, forming gaps 381, 382, 383, and 384, a frame core 380 and a circuit board 385. As noted above with regard to Fig. 3B, the gapping plate 370 may be rectangular- or circular-shaped. Similarly, the frame core 380 may have the shape of an oval, a circle, a square, a rectangle, or other shapes. In this embodiment of the invention, the gap formed by the spacer 375 has a variable width. A core having the variable gap width may be utilized in transformers or inductors, such as swinging inductors. Fig. 3E illustrates a spacer having a thin width 381 on a top side of the core and a thin width 382 on the left side of the core. The widths 381 and 382 may be the same dimension or may be different dimensions. The spacer (which is the gap) 375 has a thicker width 383 on the right hand side of the core and a thicker width 384 on the bottom side of the core. The widths 383 and 384 are larger in size than the widths 381 and 382. The widths 383 and 384 may be the same magnitude or may be different magnitudes.

Fig. 3F illustrates a cross-sectional view of a transformer core taken along a line D-D of Fig. 3E. The core in Fig. 3F includes the gapping plate 370, the frame core 380, the circuit board 385 and the bottom core 390. As is illustrated in Fig. 3F, the width of the gap 382 is smaller than the width of the gap 383. This results in fringing flux lines that radiate in parallel planes from windings on the circuit board. In Fig. 3F, the fringing flux lines are represented by reference numerals 391 and 392. In this embodiment of the invention, the parallel radiating fringing flux lines 391 and 392 do not interfere with windings on the printed circuit board 385 in the core and do not generate eddy currents. Under other operating conditions, the parallel radiating fringing flux lines 391 and 392 minimally interfere with the windings and create small eddy currents. Accordingly, the windings of the printed circuit board 385 operate efficiently and the transformer suffers minimal losses due to fringing loss in the embodiment of the invention illustrated in Figs 3E and 3F.

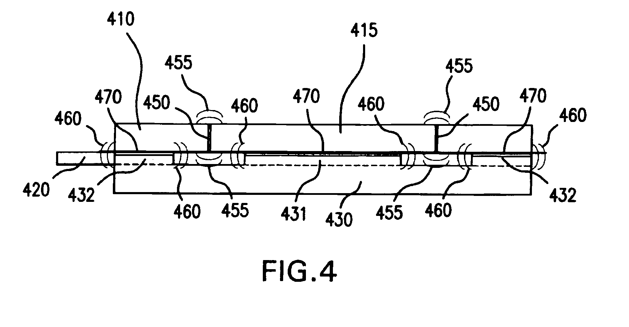

Fig. 4 illustrates a cross-sectional view of a core embodying the invention and also embodying the distributed gap topology. In this embodiment of the invention, gaps 470 are present between 1) the frame core 410 and the end sections 432 of the bottom core 430 and 2) the gapping plate 415 and the center leg 431 of the bottom core. These gaps 470 generate flux lines 460 that radiate in a horizontal direction across the printed circuit board 420. Gaps 450 are also present between the gapping plate 415 and the core frame 410. Gaps 450 create fringing flux lines 455 which radiate in a plane parallel with the surface of the circuit board away from the gap 450. The parallel radiating fringing flux lines do not generate large eddy currents and minimally interfere with the operation of the transformer or inductor because of the small or non-existent eddy currents that are generated.

The core may be made of a number of pieces. In an embodiment of the invention, the core may include a number of sections. The core may include a first magnetic section, a second magnetic section and a third magnetic section. The second magnetic core section lies above the first magnetic core portion. In this embodiment of the invention, the second magnetic core section may have a hole having a first circumference. The third magnetic core section lies above the first magnetic core portion. In an embodiment of the invention, the third magnetic core section may lie in a plane parallel to or substantially parallel to the second magnetic core section. The third magnetic core section has a second circumference. The second circumference is less than the first circumference which creates a gap between the second magnetic core section and the third magnetic core section. The gap generates magnetic flux during operation of the core which results in flux lines and fringing flux lines. The fringing flux lines radiate in a direction perpendicular to the first magnetic core section. These fringing flux lines radiate in planes parallel to the plane which includes the windings on the circuit board. In an embodiment of the invention, the magnetic flux radiates in a direction perpendicular or substantially perpendicular to the second magnetic core sections and the third magnetic core sections. In an embodiment of the invention, the first magnetic core section may include a number of pieces of core material. Illustratively, the first magnetic core section may include a center piece and a number of end pieces attached to the base. The center piece may be located in a position where the center piece is under the third magnetic core section. In an embodiment of the invention, the center piece may contact the third magnetic core section.

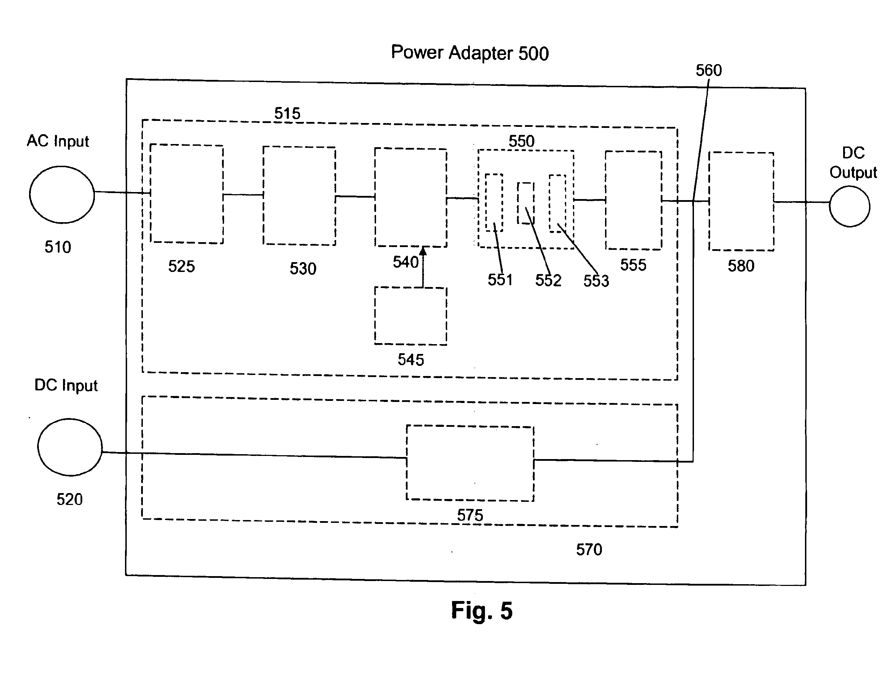

Figure 5 illustrates a block diagram for a power adapter 500. An AC power source 510 may deliver an AC input voltage. For example, the AC input voltage may be 90 - 264 Volts AC and may be operating at between 44 and 470 Hz. Alternatively, a DC power source 520 may deliver a DC voltage. For example, the DC voltage may power range from 11 - 16 Volts DC.

If the AC input power source 510 is used in a power adapter 500, the AC power source 510 may be filtered by utilizing an input EMI filter 525. The EMI filter 525 rejects both differential and common mode generated noise. The filtered input voltage exiting from the EMI filter 525 is rectified by the input rectifier 530 and may become a haversine waveform. The output of the input rectifier 530 is provided to a switching circuit 540. A control circuit 545 may control operation of the switching circuit 540. The rectified voltage is switched to a transformer 550 embodying the invention. The transformer receives the switched rectified voltage at the primary winding 551 and induces current to the secondary winding 553 of the transformer. The voltage at the secondary winding 553 is rectified and filtered by a rectifier 555 to provide an intermediate bus voltage, which is represented by reference number 560.

The DC power source 560 is used to power a high efficiency voltage doubler circuit 575. The voltage doubler circuit 575 may include an auto-transformer circuit. The voltage doubler circuit 575 effectively doubles the input voltage to provide power to the intermediate bus 560 when operating on the DC input voltage In an embodiment of the invention, the voltage doubler circuit 575 (including the auto-transformer circuit) is included in a cable 570 connected between the DC power source 520 and the power adapter body 515.

The output voltage for the power adapter 500 is provided by a high efficiency synchronous buck regulator 580. The buck regulator 580 derives power from the intermediate bus 560. The buck regulator 580 may be programmable. The buck regulator 580 may be able to output a voltage from, for example, 0 - 25 volts. This may be referred to as being capable of zero up operation.

While the description above refers to particular embodiments of the present invention, it will be understood that many modifications may be made without departing from the spirit thereof. The accompanying claims are intended to cover such modifications as would fall within the true scope and spirit of the present invention. The presently disclosed embodiments are therefore to be considered in all respects as illustrative and not restrictive, the scope of the invention being indicated by the appended claims, rather than the foregoing description, and all changes which come within the meaning and range of equivalency of the claims are therefore intended to be embraced therein.

## Claims

1. A transformer, comprising:
a core positioned in a first plane;
a winding that is located on a top portion of the core;
a frame, residing in a second plane, the frame being disposed on top of the winding and having a hole; and
a gapping plate, residing in the second plane and being disposed within the hole of the frame, the gapping plate having a smaller area than the hole of the frame which creates an gap between the gapping plate and the frame,
wherein the magnetic flux generated during operation of the transformer radiates in a direction perpendicular to the first plane and the second plane.

2. The transformer of claim 1, wherein the core is an E-core.

3. The transformer of claim 1 or claim 2, further including a spacer residing in the second plane, the spacer being disposed in the gap between the gapping plate and the frame.

4. The transformer of any preceding claim, wherein the frame is circular-shaped.

5. The transformer of any of claims 1 to 3, wherein the frame is square-shaped.

6. The transformer of any preceding claim, wherein the hole and the gapping plate are circular in shape.

7. The transformer of any preceding claim, wherein the windings are disposed on a printed circuit board.

8. The transformer of claim 7, wherein the core has depressions into which the printed circuit board fits and a center area which has a raised surface above a top surface of the depressions.

9. The transformer of claim 8, wherein the center area of the core is disposed in an opening of the printed circuit board and contacts a bottom surface of the gapping plate.

10. The transformer of any preceding claim, further including, being provided with, or being in connection with a buck regulator.

11. The transformer of any preceding claim, wherein a voltage applied to the transformer is a DC voltage.

12. The transformer of any preceding claim, wherein the winding is disposed on a printed circuit board.

13. A magnetic transformer core comprising:
a first magnetic core portion positioned in a first horizontal plane; and
a second magnetic core portion positioned in a second horizontal plane, the second horizontal plane being parallel to the first horizontal plane, the second magnetic core portion including a frame section, having a hole and a cut-out section, the cut-out section having a smaller area than an area of the hole which creates a gap between the cut-out section and the frame,
wherein magnetic flux generated during operation of the transformer core radiates in a direction perpendicular to the first horizontal plane and the second horizontal plane.

14. The magnetic transformer core of claim 13, wherein the first magnetic core portion includes depressed areas and a center raised section and the cut-out section of the second magnetic core portion lies on top of the center raised section of the magnetic core.

15. The magnetic transformer core of claim 13 or claim 14, further including a spacer placed in the gap.

16. The magnetic transformer core of any of claims 13 to 15, wherein the gap has a width of less than 0.010 inches.

17. The magnetic transformer core of any of claims 13 to 16, wherein the magnetic transformer core forms part of a power adapter, the power adapter comprising:
an input power circuit for receiving an input voltage;
a boost inductor to receive the input voltage and to output a boosted voltage, the inductor including a winding and the core of any of of any of claims 13 to 16; and
a rectifier to receive the boosted voltage and to generate a rectified voltage.

18. The magnetic transformer core of claim 17, further including a buck regulator to receive the rectified voltage and to generate an output voltage.

19. The magnetic transformer core of claim 17 or claim 18, wherein the input voltage is a DC voltage.
